# EUROPEAN PATENT SPECIFICATION

(11) **EP 2 796 319 B1**
(45) Date of publication and mention of the grant of the patent: **25.05.2016**
(21) Application number: 14162472.6
(22) Date of filing: 28.03.2014
(51) Int. Cl.: B60Q 1/00, B60Q 1/18, F21S 8/10, B60Q 1/068

(54) **Lighting system for a vehicle**
Beleuchtungssystem für ein Fahrzeug
Système d'éclairage pour un véhicule

(30) Priority: 24.04.2013 JP 2013091716
(43) Date of publication of application: 29.10.2014
(73) Proprietor: Honda Motor Co., Ltd., Tokyo 107-8556 (JP)
(72) Inventor: Takenaka, Nobuyuki, Wako-shi, Saitama 351-0193 (JP); Hayashi, Hiroshi, Wako-shi, Saitama 351-0193 (JP)
(74) Representative: Stevens, Jason Paul

(56) References cited:
- EP-A1- 2 327 585
- EP-A2- 1 048 893
- EP-A2- 2 194 311
- WO-A1-2012/096406
- WO-A1-2013/022027
- DE-A1- 10 314 645
- DE-A1-102006 007 134
- DE-A1-102009 010 510
- JP-U- S61 171 107
- US-A1- 2011 032 721
- US-A1- 2012 069 592

## Description

The present invention relates to a lighting system for a vehicle provided with a main light, an extension arranged between a reflector of the main light and an outer lens, and a light guide member located in the vicinity of the extension.

A lighting system for a vehicle as described above is known from, for example, Japanese Patent Laid-open Publication No. 2011-65839. In the lighting system described in this document, light from a light source for the main light is incident upon a light guide member. However, with such a construction, the degree of freedom with respect to the arrangement of the light guide member is decreased. Therefore, a light source for the exclusive use of the light guide member may have to be provided separately from the light source for the main light. In this case, the light source for the light guide member and a driver for the light guide member for adjusting the power supply amount to the light source for the light guide member must be arranged without damaging the external appearance.

An alternative form of vehicle light is disclosed in DE 102009010510, DE 102009010510 is concerned with a vehicle light, which includes a conventional bulb, reflector and lens. Attached to one side of the light is an LED which emits light into a light guide. The light guide changes the direction of the light so that it is emitted in the same direction as the light from the bulb and reflector, and the LED and light guide are mounted on a member which extends to one side of the light. However, there is no discussion in DE 102009010510 of how power is supplied to the LED. An alternative form of vehicle light is disclosed in DE102006007134, on which the preamble of claim 1 is based.

The present invention has been made in consideration of the above circumstances, and it is an object of at least the preferred embodiments to provide a lighting system for a vehicle where a light source for a light guide member and a driver for the light guide member can be arranged without damaging the external appearance in the case where the light source for the exclusive use of the light guide member is provided separately from the light source for the main light.

According to a first aspect of the invention, there is provided a lighting system for a vehicle comprising: a main light, an extension located between a reflector for the main light and an outer lens, a light guide member located in the vicinity of the extension, a light source for the light guide member, which is separate from a light source for the main light provided in the main light, a light incident section provided in the light guide member for admitting light from the light source into the light guide member, and a driver for the light guide member for adjusting power supply amount to the light source for the light guide member; the light incident section and the driver for the light guide member are arranged in such a position as to be covered by the extension when viewed from the front; the light guide member is fixedly attached to the extension, and the light source for the light guide member is fixedly attached to at least one of the extension and the light guide member; the light source for the light guide member and the driver for the light guide member are provided on a common base plate, and the base plate is fixedly supported on at least one of the extension and the light guide member; characterized in that:
further comprising a lead wire being led into the housing from a back wall of the housing so as to supply electric power to the driver for the light guide member, wherein the lead wire is formed with a curved portion bulging forwardly in front of the back wall and is connected to the base plate, and a regulation plate section being provided at a laterally outer end of the extension so as to regulate laterally inward displacement of the curved portion within the housing; and further
comprises an adjustment support section which allows the reflector to be supported in the housing in such a manner as to make it possible to adjust an optical axis of the main light, wherein the curved portion and the adjustment support section are arranged laterally side by side and in close vicinity to each other, and the regulation plate section is located laterally between the curved portion and the adjustment support section.

With this construction, it is possible to effectively arrange the light incident section and the driver for the light guide member without affecting the external appearance.

Further, since the light source for the light guide member is fixedly attached to at least one of the extension and the light guide member (which is in turn fixedly supported on the extension), the relative positions of the light incident section and the light guide member can be controlled.

In addition, as the light source for the light guide member and the driver for the light guide member are provided on a common base plate, and the base plate is fixedly supported on at least one of the extension and the light guide member, the light source for the light guide member and the driver for the light guide member can be assembled without increasing the number of component parts, thus reducing costs. In addition, it is possible to simplify the assembling of the light source for the light guide member and the driver for the light guide member.

Furthermore, with this arrangement, the lead wire has enough length, so that when the extension or the light guide member on which the base plate is attached is assembled into the housing, the assembling operation can be easily performed. Moreover, since the regulation plate section provided at the laterally outer end portion of the extension is adapted to regulate the inward displacement of the curved portion within the housing, it is possible to control the inward displacement of the lead wire.

Further, interference between the adjustment support section and the curved portion is prevented, and the adjustment support section is arranged as laterally outwardly as possible, so that the reflector can be supported in a stable fashion.

In a preferred form, the driver for the light guide member is fixedly supported on at least one of the extension and the light guide member in such a position as to be covered by the extension when viewed from the front.

With this arrangement, the external appearance can be improved, as the driver for the light guide member is not visible from the outside.

In a further preferred form, the base plate is vertically elongate, and is arranged laterally outside of the main light, and the light source for the light guide member and the driver for the light guide member are attached to the base plate so as to be vertically aligned with each other.

Thus, the width of the base plate can be decreased, and so the width of the lighting system can be decreased.

In a further preferred form, the light guide member is configured to extend vertically such that an upper end of the light guide member is arranged laterally further outwardly than a lower end thereof, and the light incident section is located on the rear of the upper end of the light guide member and the driver for the light guide member is arranged below the light source for the light guide member.

With this construction, the light source for the light guide member and the driver for the light guide member can be easily arranged on the base plate.

By the way, a headlight device 32 in the embodiment corresponds to a lighting system of the present invention. A high beam headlight 34 and a low beam headlight 35 in the embodiment correspond to the main light of the present invention. A light source 40 for the high beam headlight and a light source 46 for the low beam headlight in the embodiment correspond to the light source for the main light, and a support spindle 52 in the embodiment corresponds to the adjustment support section of the present invention.

Preferred embodiments of the invention will now be described by way of example only and with reference to the accompanying drawings, in which:
FIG. 1 is a side view of a motorcycle;
FIG. 2 is a partially cutaway front view of a headlight device taken along arrow 2 in FIG. 1;
FIG. 3 is a cross-sectional view taken along line 3-3 in FIG. 2;
FIG. 4 is a cross-sectional view taken along line 4-4 in FIG. 2;
FIG. 5 is a cross-sectional view taken along line 5-5 in FIG. 2;
FIG. 6 is a cross-sectional view taken along line 6-6 in FIG. 2;
FIG. 7 is a cross-sectional view taken along line 7-7 in FIG. 2;
FIG. 8 is a perspective view of an extension;
FIG. 9 is a cross-sectional view taken along line 9-9 in FIG. 2; and
FIG. 10 is a cross-sectional view of a part corresponding to a part of FIG. 9, in accordance with a second embodiment.

Preferred embodiments of the present invention will be explained with reference to the attached drawings. In the following description, terms such as "front", "rear", "left", "right", "upper" and "lower" should be interpreted from the viewpoint of a person riding on the motorcycle.

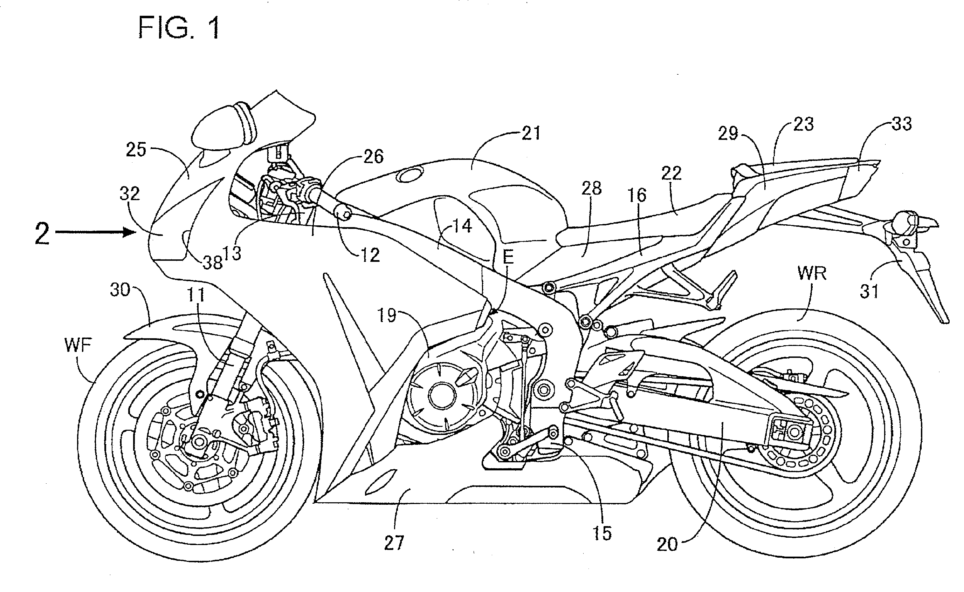

Referring first to FIG. 1, a vehicle body frame F of a motorcycle (as an example of a straddle-type vehicle) includes a pair of front forks 11 rotatably carrying a front wheel WF, a head pipe 13 rotatably supporting a steering handlebar 12 which is connected to the front forks 11, a pair of left and right main frames 14 extending downwardly and rearwardly from the head pipe 13, a pair of left and right pivot frames 15 integrally connected with rear portions of the main frames 14 and extending downwardly therefrom, and a pair of left and right seat rails 16 extending upwardly and rearwardly from the rear portions of the main frames 14.

On the vehicle body frame F, there is carried an engine body 19 of a water-cooled internal combustion engine E which is arranged under the main frames 14. In addition, a front end of a swing arm 20 is pivotally mounted to the pivot frames 15 in a vertically swingable fashion. A rear wheel WR which is driven by motive power of the internal combustion engine E is rotatably carried on a rear end of the swing arm 20.

A fuel tank 21 is mounted on the main frames 14 above the internal combustion engine E. A front riding seat 22 located behind the fuel tank 21 and a rear riding seat 23 (pillion seat) located behind the front riding seat 22 are supported by the seat rails 16.

A front cowling 25 is located above the front wheel WF and is supported by the vehicle body frame F. The head pipe 13, which is located at a front end portion of the vehicle body frame F, is covered by the front cowling 25 from the front. A pair of left and right centre cowlings 26 for covering the front portion of the vehicle body frame F and a portion of the internal combustion engine E from each side are connected to left and right sides of the front cowling 25. A pair of left and right lower cowlings 27 which cover a lower part of the internal combustion engine E from the sides and from beneath and which are joined to each other are connected continuously to rear lower portions of the centre cowlings 26, respectively. In addition, a pair of left and right side covers 28 for covering a rear lower part of the fuel tank 21 from each side is arranged between the fuel tank 21 and the front riding seat 22. A part of each of the seat rails 16 located below the rear riding seat 23 is covered with a rear cowling 29.

Further, the front forks 11 support a front fender 30 for covering at least a portion of the front wheel WF from above, while on the rear of the seat rails 16 there is supported a rear fender 31 for covering the rear wheel WR from above and behind.

A headlight device 32 in accordance with a preferred embodiment of the present invention is arranged in a laterally central position of the front cowling 26, while a tail light device 33 is arranged in a laterally central position of a rear end of the rear cowling 29.

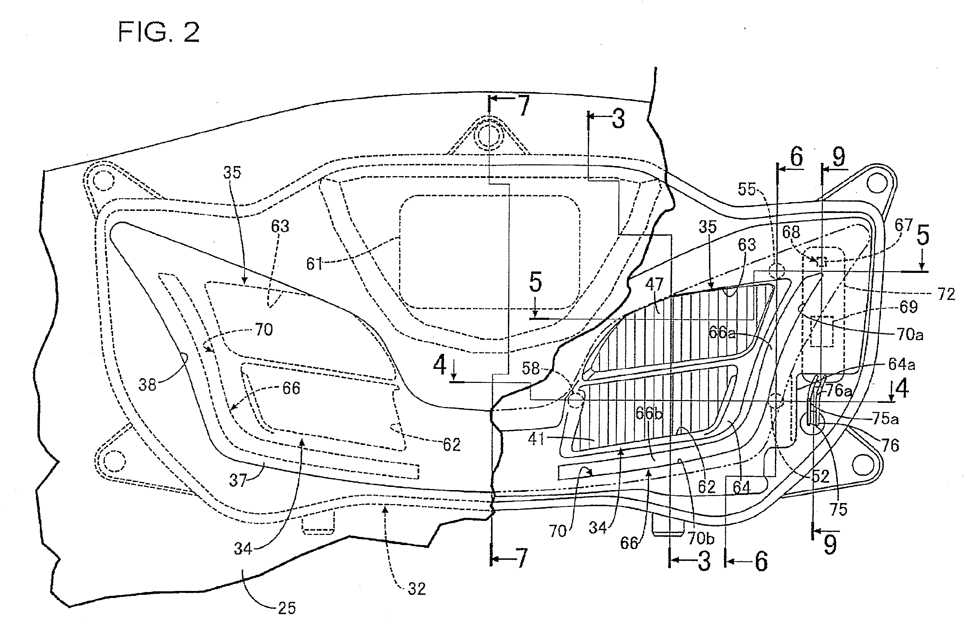

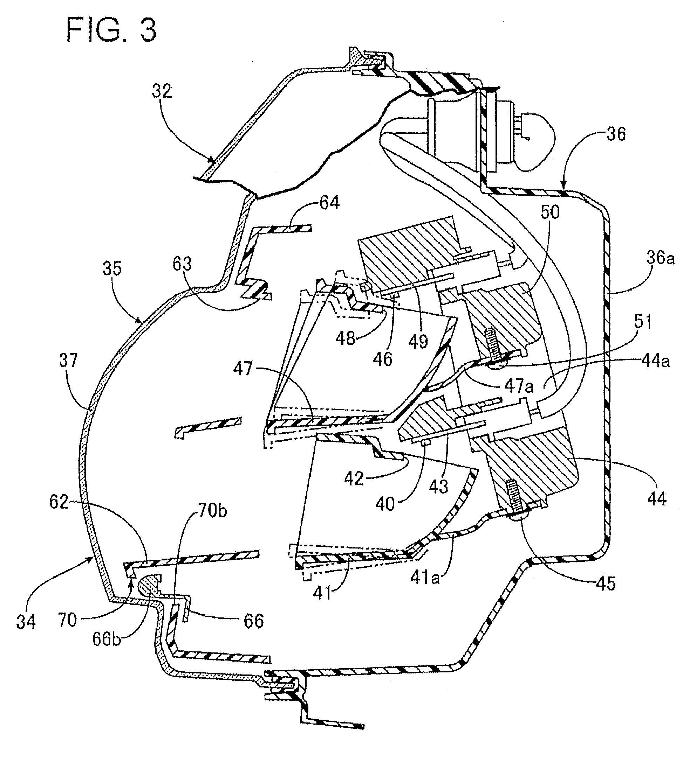

With reference to FIGS. 2 and 3, a main light of the headlight device 32 includes a pair of left and right high beam headlights 34, 34, and a pair of left and right low beam headlights 35, 35 arranged above the high beam headlights 34, 34. The high beam headlights 34, 34 and the low beam headlights 35, 35 have in common a single housing 36 and a single lens 37, which is attached to the housing 36 from the front with a portion facing into an opening portion 38 provided in the front cowling 25.

The high beam headlight 34 includes the housing 36, the lens 37, a light source 40 for the high beam headlight 34, and a reflector 41 for the high beam headlight 34, which reflects light from the light source 40 for the high beam headlight 34 in the forward direction. The light source 40 for the high beam headlight 34 is an LED.

In a rear upper part of the reflector 41 for the high beam headlight 34, there is provided an aperture 42 which allows the light from the light source 40 for the high beam headlight 34 provided above the reflector 41 for the high beam headlight 34 to enter inside the reflector 41 for the high beam headlight 34. The light source 40 for the high beam headlight 34 is attached to a base plate 43 for the high beam headlight 34 in such a way as to emit light toward the aperture 42 of the reflector 41 for the high beam headlight 34.

The low beam headlight 35 includes the housing 36, the lens 37, a light source 46 for the low beam headlight 35, and a reflector 47 for the low beam headlight 35, which reflects light from the light source 46 for the low beam headlight 35 in the forward direction. The light source 46 for the low beam headlight 35 is an LED.

In a rear upper part of the reflector 47 for the low beam headlight 35, there is provided an aperture 48 which allows light from the light source 46 for the low beam headlight 35 provided above the reflector 47 for the low beam headlight 35 to enter inside the reflector 47 for the low beam headlight 35. The light source 46 for the low beam headlight 35 is attached to a base plate 49 for the low beam headlight 35 in such a way as to emit light toward the aperture 48 of the reflector 47 for the low beam headlight 35.

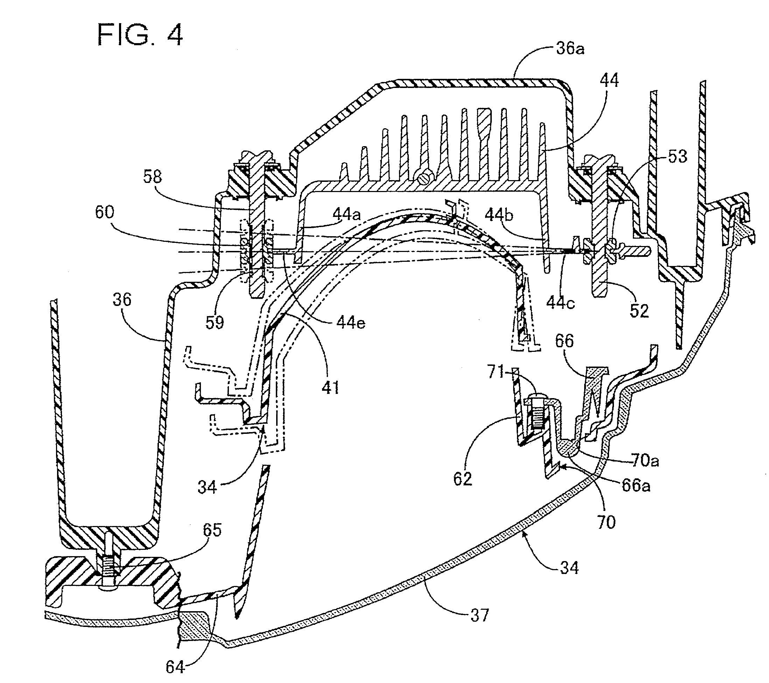

Referring now also to FIG. 4, at the rear of the reflector 41 for the high beam headlight 34 is a heat sink 44 for the high beam headlight 34, which is fastened to a support arm portion 41 a formed integrally with the reflector 41 for the high beam headlight 34 by a screw member 45 (see FIG. 3). The base plate 43 for the high beam headlight 34 is attached to the heat sink 44 for the high beam headlight 34.

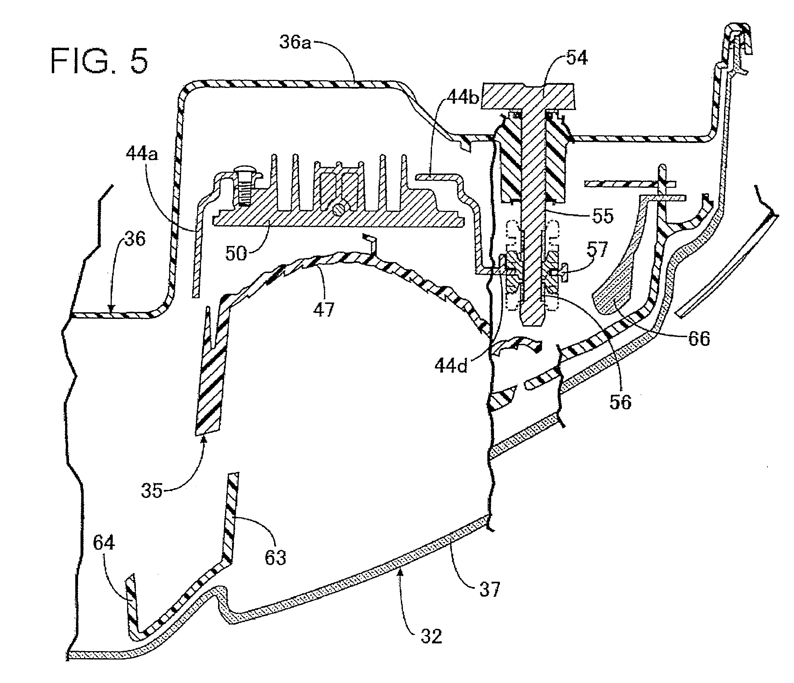

Referring now also to FIG. 5, at the rear of the reflector 47 for the low beam headlight 35 is provided a heat sink 50 for the low beam headlight 35, which is fastened to a support arm portion 47a formed integrally with the reflector 47 for the low beam headlight 35 by a screw member 51 (see FIG. 3). The base plate 49 for the low beam headlight 35 is attached to the heat sink 50 for the low beam headlight 35.

Moreover, a pair of upwardly extending connecting arm portions 44a, 44b is integrally provided on each lateral end of the heat sink 44 for the high beam headlight 34. The heat sink 50 for the low beam headlight 34 is fastened to these connecting arm portions 44a, 44b. Thus, the heat sink 44 for the high beam headlight 34 and the heat sink 50 for the low beam headlight 35 located above it are connected to each other in a specific relative positional relationship.

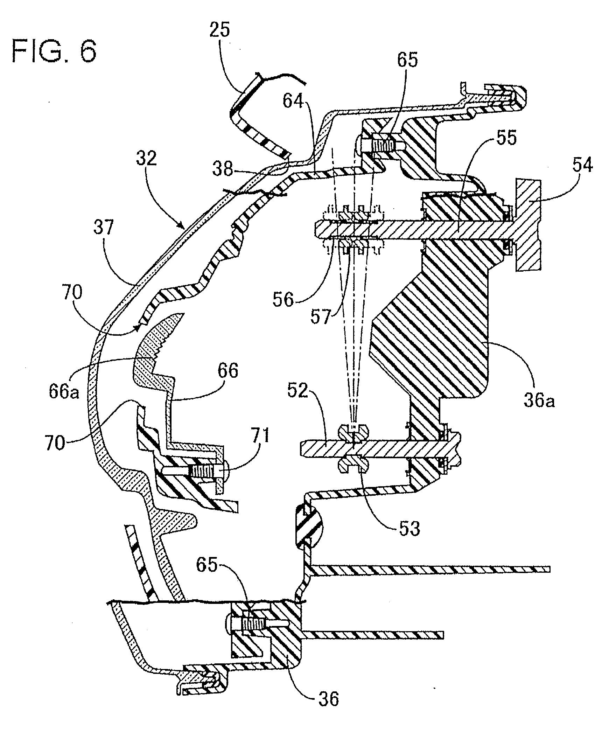

Referring now also to FIG. 6, a support arm 44c which extends laterally outwardly is integrally provided on a lower part of the connecting arm portion 44b located on a laterally outer side. Further, at a laterally outer lower part of a back wall 36a of the housing 36, there is provided a support spindle 52 which extends in the longitudinal direction of the vehicle and passes through the back wall 36a in a fluid-tight manner. A distal end of the support arm portion 44c is swingably supported in a nut 53 which is screwed on the support spindle 52.

Further, an arm portion 44d which extends laterally outwardly is integrally provided on an upper part of the connecting arm 44b located on the laterally outer side. A rotation spindle 55 which is integrally provided at an rear end thereof with a knob 54 and which extends in parallel with the support spindle 52 is supported in a rotatable fashion on a laterally outer upper part of the back wall 36a of the housing 36, and passes through the back wall 36a in a fluid-tight manner. A distal end of the arm portion 44d is connected to a nut 57 which is engaged on a male screw 56 formed on an outer periphery of the rotation spindle 55.

When the rotation spindle 55 is rotated by the knob 54, the nut 57 moves along the axis of the rotation spindle 55, so that, as seen in FIGS. 3 and 6, the high beam headlight 34 and the low beam headlight 35 swing or rock on the nut 57. In this way, the optical axes of the high beam headlight 34 and the low beam headlight 35 can be adjusted in the vertical direction.

Referring to FIG. 4, an arm 44e which extends laterally inwardly is provided in a lower part of the connecting arm portion 44a located laterally inwardly. Further, a bolt 58 which extends in parallel with the support spindle 52 and passes through the back wall 36a in a fluid-tight manner is supported in a rotatable fashion on a laterally inner lower part of the back wall 36a of the housing 36. A distal end of the arm portion 44e is connected to a nut 60 which is engaged on a male screw 59 provided on the bolt 58.

When the bolt 58 is rotated, the nut 59 moves along the axis of the bolt 58, so that, as shown by a chain line in FIG. 4, the high beam headlight 34 and the low beam headlight 35 swing or rock on the nut 57. In this way, the optical axes of the high beam headlight 34 and the low beam headlight 35 can be adjusted in the lateral (left and right) direction.

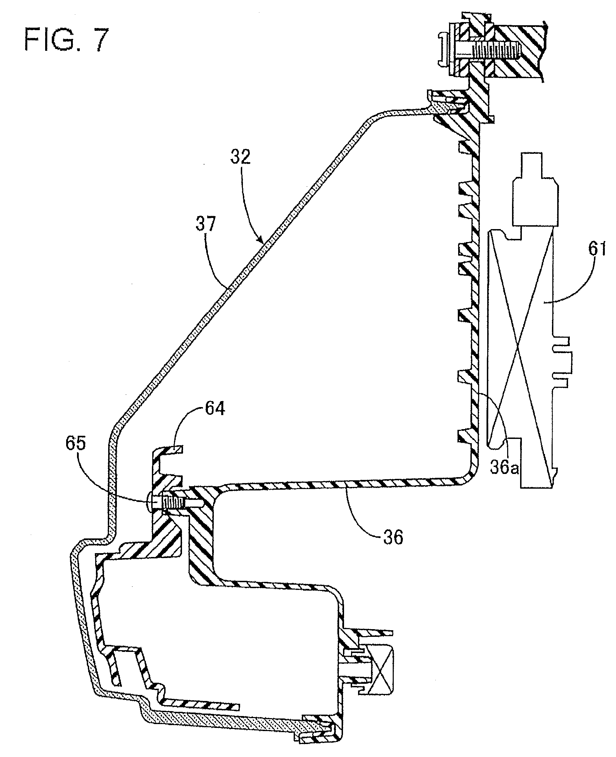

Referring now also to FIG. 7, behind the lateral centre of the housing 36, there is arranged a driver 61 for adjusting the power supply amount to the light source 40 for the high beam headlight 34 and to the light source 46 for the low beam headlight 35.

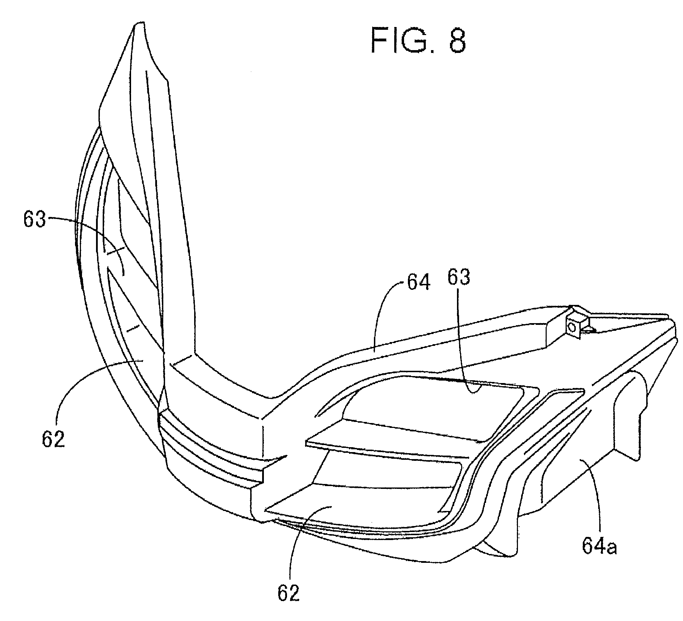

Referring also to FIG. 8, between the outer lens 37 and the reflectors for the high beam headlight 34 and the low beam headlight 35, there is arranged an extension 64, which has a pair of windows 62 for the high beam headlight 34 into which the pair of left and right high beam headlights 34 faces, and a pair of windows 63 for the low beam headlight 35 into which the pair of left and right low beam headlights 35 faces. This extension 64 is fastened to the housing 36 by a plurality of screw members 65.

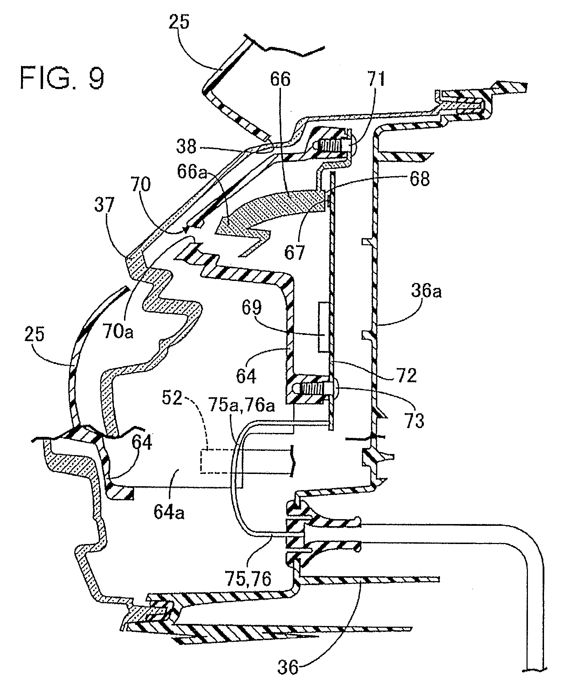

Referring now also to FIG. 9, the headlight device 32 is provided with a pair of left and right light guide members 66, arranged in the vicinity of the extension 64, and a pair of left and right light sources 67 for the light guide members 66, which are separate from the light sources for the main lights. A light incident section 68 which is provided in the light guide member 66 for admitting light from the light source 67 for the light guide member 66, and a driver 69 for the light guide member 66 which is provided for adjusting the power supply amount to the light source 67 for the light guide member 66, are arranged in such a position as to be covered by the extension 64 when viewed from the front.

The light guide member 66 extends along laterally outer sides of the reflector 41 for the high beam headlight 34 and the reflector 47 for the low beam headlight 35, and along a lower part of the reflector 41 for the high beam headlight 34. The light guide member 66 is configured to extend vertically such that an upper end of the light guide member 66 is located laterally further outward than a lower end of the light guide member 66. Moreover, the light guide member 66 is fixedly supported on the extension 64 in such a manner that a portion of the light guide member 66 faces into a slit 70 provided in the extension 64.

Specifically, the light guide member 66 has a lateral straight portion 66a which extends obliquely upwardly and laterally outwardly on the laterally outer side of the reflector 41 for the high beam headlight 34 and the reflector 47 for the low beam headlight 35, and a lower straight portion 66b which extends obliquely downwardly and laterally inwardly from a lower end of the lateral straight portion 66a and which is arranged below the reflector 41 for the high beam headlight 34. The light guide member 66 is fastened to the extension 64 by a plurality of screw members 71. The slit 70 is configured to have a lateral straight portion 70a which allows a portion of the lateral straight portion 66a of the light guide member 66 to face thereinto, and a lower straight portion 70b which allows a portion of the lower straight portion 66b of the light guide member 66 to face thereinto.

The upper end of the light guide member 66 is located higher than an upper end of the lateral straight portion 70a of the slit 70. The light incident section 68 is located on the rear of the upper end of the light guide member 66 in such a way as to be covered by the extension 64 when viewed from the front.

The light source 67 for the light guide member 66 is an LED, and is arranged in a position near to and facing the light incident section 68. The light source 67 is fixedly supported on at least one of the extension 64 and the light guide member 66 (in this embodiment, on the extension 64).

Further, the driver 69 for the light guide member 66 is fixedly supported on at least one of the extension 64 and the light guide member 66 (in this embodiment, on the extension 64) in such a position as to be covered by the extension 64 when viewed from the front.

The light source 67 for the light guide member 66 and the driver 69 for the light guide member 66 are provided on a common base plate 72. The base plate 72 is fixedly supported on at least one of the extension 64 and the light guide member 66. In this embodiment, the base plate 72 is fastened to the extension 64 by a screw member 73.

The base plate 72 is formed in a vertically elongate shape and arranged laterally outside of the high beam headlight 34 and the low beam headlight 35 serving as the main light. The light source 67 for the light guide member 66 and the driver 69 for the light guide member 66 are attached to the base plate 72 so as to be vertically aligned with each other. Specifically, the driver 69 for the light guide member 66 is provided on the base plate 72 so as to be located below the light source 67 for the light guide member 66, which is located in an upper end portion of the base plate 72.

A pair of lead wires 75, 76 for supplying electric power to the driver 69 for the light guide member 66 is led into the housing 36 from the back wall 36a of the housing 36. These lead wires 75, 76 are formed with curved portions 75a, 76a bulging forwardly in front of the back wall 36a, and are connected to the base plate 72. In addition, a regulation plate section 64a is provided at a laterally outer end portion of the extension 64 so as to regulate laterally inward displacement of the curved portions 75a, 76a, within the housing 36.

The curved portions 75a, 76a, and the support spindle 52 serving as an adjustment support section which allows the reflector 41 for the high beam headlight 34 and the reflector 47 for the low beam headlight 35 to be supported in the housing 36 in such a manner as to make it possible to adjust the optical axes of the high beam headlight 34 and the low beam headlight 35, as clearly shown in FIG. 2, are arranged laterally side by side and in close vicinity to each other. The regulation plate section 64a is located laterally between the support spindle 52 and the curved portions 75a, 76a.

Next, the operation of this embodiment will be explained.

The headlight device 32 is provided with the light sources 67 for the light guide members 66, which are provided separately from the light sources 40 for the light sources 40 for the high beam headlights 34 and the light sources 46 for the low beam headlights 35. The light incident section 68 which is provided in the light guide member 66 for admitting the light from the light source 67 for the light guide member 66, and the driver 69 for the light guide member 66 which is provided for adjusting the power supply amount to the light source 67 for the light guide member 66, are arranged in such a position as to be covered by the extension 64 when viewed from the front. With this construction, the light incident section 68 and the driver 69 for the light guide member 66 can be arranged effectively without affecting the external appearance.

Further, since the light guide member 66 is fixedly supported on the extension 64 and the light source 67 for the light guide member 66 is fixedly attached to at least one of the extension 64 and the light guide member 66 (in this embodiment, the extension 64), irregularity in the relative positions of the light incident section 68 and the light guide member 66 can be controlled.

Further, since the driver 69 for the light guide member 66 is fixedly supported on at least one of the extension 64 and the light guide member 66 (in this embodiment, the extension 64) in such a position as to be covered by the extension 64 when viewed from the front, the external appearance can be improved in that the driver 69 for the light guide member 66 is not visible from the outside.

Further, since the light source 67 for the light guide member 66 and the driver 69 for the light guide member 66 are provided on the common base plate 72, and the base plate 72 is fixedly supported on at least one of the extension 64 and the light guide member 66 (in this embodiment, the extension 64), the light source 67 for the light guide member 66 and the driver 69 for the light guide member 66 can be assembled without increasing the number of component parts, to thereby permit cost reduction. In addition, it is possible to simplify the assembling of the light source 67 for the light guide member 66 and the driver 69 for the light guide member 66.

Further, the base plate 72, which is configured to extend vertically, is arranged laterally outside of the high beam headlight 34 and the low beam headlight 35, and the light source 67 of the light guide member 66 and the driver 69 for the light guide member 66 are attached to the base plate 72 so as to be vertically aligned with each other. Therefore, the lateral width of the base plate 72 can be decreased, so that the width of the headlight device 32 can be decreased.

Further, the light guide member 66 is configured to extend vertically such that the upper end of the light guide member 66 is arranged laterally further outwardly than the lower end thereof, and the light incident section 68 is located on the side of the upper end of the light guide member 66 while the driver 69 for the light guide member 66 is located below the light source 67 for the light guide member 66. Therefore, the light source 67 for the light guide member 66 and the driver 69 for the light guide member 66 can be easily arranged on the base plate 72.

Further, the lead wires 75, 76 for supplying electric power to the driver 69 for the light guide member 66 are led into the housing 36 from the back wall 36a of the housing 36 so as to be connected to the base plates 72, and are formed with the curved portions 75a, 76a bulging forwardly in front of the back wall 36a. In addition, the regulation plate section 64a is provided at the laterally outer end portion of the extension 64 so as to regulate the laterally inward displacement of the curved portions 75a, 76a, within the housing 36. Therefore, the lead wires 75, 76 have sufficient length, so that when at least one of the extension 64 and the light guide member 66 on which the base plate 72 is attached is assembled into the housing 36, the assembling operation can be easily performed. Moreover, since the regulation plate section 64a provided at the laterally outer end portion of the extension 64 is configured to regulate the laterally inward displacement of the curved portions 75a, 76a, within the housing 36, it is possible to control the laterally inward displacement of the lead wires 75, 76.

Further, the curved portions 75a, 76a, and the support spindle 52 which allows the reflector 41 for the high beam headlight 34 and the reflector 47 for the low beam headlight 35 to be supported in the housing 36 in such a manner as to make it possible to adjust the optical axes of the high beam headlight 34 and the low beam headlight 35, are arranged laterally side by side and in close vicinity to each other. The regulation plate section 64a is located laterally between the support spindle 52 and the curved portions 75a, 76a. Therefore, interference between the support spindle 52 and the curved portions 75a, 76a is prevented, and the support spindle 52 is arranged as laterally outwardly as possible, so that the reflector 41 for the high beam headlight 34 and the reflector 47 for the low beam headlight 35 can be supported in a stable fashion.

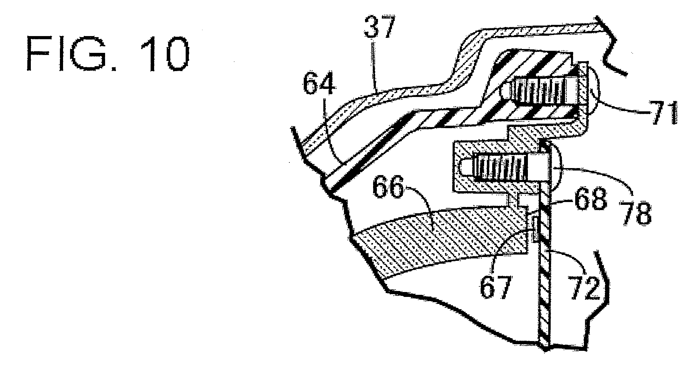

In a second embodiment as shown in FIG. 10, the base plate 72 on which the light source 67 for the light guide member 66 and the driver 69 for the light guide member 66 are provided may be fastened by a screw member 78 and fixedly supported on the light guide member 66 which is fixed to the extension 64.

Furthermore, the base plate 72 may be fixedly supported by both the extension 64 and the light guide member 66.

Preferred embodiments of the present invention have been described; however, the present invention is not limited to the embodiments described above, and various changes and modifications may be made without departing from the scope of the present invention as defined in the appended claims.

## Claims

1. A lighting system for a vehicle comprising:
a main light (34, 35),
an extension (64) located between a reflector (41, 47) for the main light (34, 35) and an outer lens (37),
a light guide member (66) located in the vicinity of the extension (64),
a light source (67) for the light guide member (66), which is separate from a light source (40, 46) for the main light (34, 35) provided in the main light (34, 35),
a light incident section (68) provided in the light guide member (66) for admitting light from the light source (67) into the light guide member (66), and
a driver (69) for the light guide member (66) for adjusting power supply amount to the light source (67) for the light guide member (66);
the light incident section (68) and the driver (69) for the light guide member (66) are arranged in such a position as to be covered by the extension (64) when viewed from the front.;
the light guide member (66) is fixedly attached to the extension (64), and the light source (67) for the light guide member (66) is fixedly attached to at least one of the extension (64) and the light guide member (66);
the light source (67) for the light guide member (66) and the driver (69) for the light guide member (66) are provided on a common base plate (72), and the base plate (72) is fixedly supported on at least one of the extension (64) and the light guide member (66); **characterized in** the lighting system,
further comprising a lead wire (75, 76) being led into the housing (36) from a back wall (36a) of the housing (36) so as to supply electric power to the driver (69) for the light guide member (66), wherein the lead wire (75, 76) is formed with a curved portion (75a, 76a) bulging forwardly in front of the back wall (36a) and is connected to the base plate (72), and a regulation plate section (64a) being provided at a laterally outer end of the extension (64) so as to regulate laterally inward displacement of the curved portion (75a, 76a) within the housing (36); and
further comprising an adjustment support section (52) which allows the reflector (41, 47) to be supported in the housing (36) in such a manner as to make it possible to adjust an optical axis of the main light (34, 35), wherein the curved portion (75a, 76a) and the adjustment support section (52) are arranged laterally side by side and in close vicinity to each other, and the regulation plate section (64a) is located laterally between the curved portion (75a, 76a) and the adjustment support section (52).

2. A lighting system for a vehicle according to claim 1, wherein the driver (69) for the light guide member (66) is fixedly supported on at least one of the extension (64) and the light guide member (66) in such a position as to be covered by the extension (64) when viewed from the front.

3. A lighting system for a vehicle according to claim 1, wherein the base plate (72) is vertically elongate, and is arranged laterally outside of the main light (34, 35), and the light source (67) for the light guide member (66) and the driver (69) for the light guide member (66) are attached to the base plate (72) so as to be vertically aligned with each other.

4. A lighting system for a vehicle according to claim 3, wherein the light guide member (66) is configured to extend vertically such that an upper end of the light guide member (66) is arranged laterally further outwardly than a lower end thereof, and the light incident section (68) is located on the rear of the upper end of the light guide member (66) and the driver (69) for the light guide member (66) is arranged below the light source (67) for the light guide member (66).

## Patentansprüche

1. Beleuchtungssystem für ein Fahrzeug, umfassend:
ein Hauptlicht (34, 35),
eine Erweiterung (64), die sich zwischen einem Reflektor (41, 47) für das Hauptlicht (34, 35) und einer Außenlinse (37) befindet,
ein Lichtführungselement (66), das sich in der Nähe der Erweiterung (64) befindet,
eine Lichtquelle (67) für das Lichtführungselement (66), die von einer Lichtquelle (40, 46) für das Hauptlicht (34, 35) separat ist, die in dem Hauptlicht (34, 35) zur Verfügung gestellt ist,
einen Lichteinfallsabschnitt (68), der in dem Lichtführungselement (66) zum Einlassen von Licht von der Lichtquelle (67) in das Lichtführungselement (66) zur Verfügung gestellt ist, und
einen Treiber (69) für das Lichtführungselement (66) zum Anpassen der Stromversorgungsmenge an die Lichtquelle (67) für das Lichtführungselement (66);
den Lichteinfallsabschnitt (68) und der Treiber (69) für das Lichtführungselement (66) sind in einer derartigen Position angeordnet, dass sie durch die Erweiterung (64) abgedeckt werden, wenn sie von der Vorderseite gesehen werden;
das Lichtführungselement (66) ist fest an der Erweiterung (64) befestigt, und die Lichtquelle (67) für das Lichtführungselement (66) ist fest an mindestens einem, entweder der Erweiterung (64) oder dem Lichtführungselement (66) befestigt;
die Lichtquelle (67) für das Lichtführungselement (66) und der Treiber (69) für das Lichtführungselement (66) sind auf einer gemeinsamen Basisplatte (72) zur Verfügung gestellt, und die Basisplatte (72) wird auf mindestens einem, der Erweiterung (64) oder dem Lichtführungselement (66) fest getragen;
**dadurch gekennzeichnet, dass** das Beleuchtungssystem
des Weiteren einen Führungsdraht (75, 76) umfasst, der in das Gehäuse (36) von einer Rückwand (36a) des Gehäuses (36) dergestalt geführt wird, dass dem Treiber (69) für das Lichtführungselement (66) elektrischer Strom zugeführt wird, wobei der Führungsdraht (75, 76) mit einem gebogenen Abschnitt (75a, 76a) ausgebildet ist, der sich vor der Rückwand (36a) nach vorne wölbt und mit der Basisplatte (72) verbunden ist, und wobei ein Regulierungsplattenabschnitt (64a) an einem seitlichen äußeren Ende der Erweiterung (64) dergestalt zur Verfügung gestellt ist, dass die Verschiebung des gebogenen Abschnitts (75a, 76a) innerhalb des Gehäuses (36) seitlich nach innen geregelt wird; und
des Weiteren einen Anpassungsunterstützungsabschnitt (52) umfassend, welcher ermöglicht, dass der Reflektor (41, 47) in dem Gehäuse (36) dergestalt getragen wird, dass es möglich ist, eine optische Achse des Hauptlichts (34, 35) einzustellen, wobei der gebogene Abschnitt (75a, 76a) und der Anpassungsunterstützungsabschnitt (52) lateral Seite an Seite und in nächster Nähe zueinander angeordnet sind, und der Regulierungsplattenabschnitt (64a) sich lateral zwischen dem gebogenen Abschnitt (75a, 76a) und dem Anpassungsunterstützungsabschnitt (52) befindet.

2. Beleuchtungssystem für ein Fahrzeug nach Anspruch 1, wobei der Treiber (69) für das Lichtführungselement (66) auf mindestens einer entweder der Erweiterung (64) oder dem Lichtführungselement (66) in einer derartigen Stellung getragen wird, dass er durch die Erweiterung (64) überdeckt wird, wenn er von der Vorderseite aus gesehen wird.

3. Beleuchtungssystem für ein Fahrzeug nach Anspruch 1, wobei die Basisplatte (72) vertikal länglich ist, und lateral außerhalb des Hauptlichts (34, 35) angeordnet ist, und die Lichtquelle (67) für das Lichtführungselement (66) und der Treiber (69) für das Lichtführungselement (66) an der Basisplatte (72) dergestalt befestigt sind, dass sie vertikal miteinander ausgerichtet sind.

4. Beleuchtungssystem für ein Fahrzeug nach Anspruch 3, wobei das Lichtführungselement (66) dazu ausgestaltet ist, sich vertikal dergestalt zu erstrecken, dass ein oberes Ende des Lichtführungselementes (66) lateral weiter nach außen angeordnet ist, als ein unteres Ende davon, und der Lichteinfallsabschnitt (68) sich hinter dem oberen Ende des Lichtführungselementes (66) befindet, und der Treiber (69) des Lichtführungselementes (66) unter der Lichtquelle (67) für das Lichtführungselement (66) angeordnet ist.

## Revendications

1. Système d'éclairage pour un véhicule, comprenant :
une lumière principale (34, 35),
une extension (64) située entre un réflecteur (41, 47) pour la lumière principale (34, 35) et une lentille externe (37),
un élément de guidage de lumière (66) situé au voisinage de l'extension (64),
une source de lumière (67) pour l'élément de guidage de lumière (66) qui est séparée d'une source de lumière (40, 46) pour la lumière principale (34, 35), aménagée dans la lumière principale (34, 35),
une section incidente de lumière (68) aménagée dans l'élément de guidage de lumière (66) pour admettre de la lumière de la source de lumière (67) dans l'élément de guidage de lumière (66) et
un pilote (69) pour l'élément de guidage de lumière (66) afin d'ajuster la quantité d'énergie fournie à la source de lumière (67) pour l'élément de guidage de lumière (66) ;
la section incidente de lumière (68) et le pilote (69) pour l'élément de guidage de lumière (66) sont aménagés dans une position où ils sont recouverts par l'extension (64) lorsqu'on les observe de l'avant ;
l'élément de guidage de lumière (66) est rattaché de manière fixe à l'extension (64) et la source de lumière (67) pour l'élément de guidage de lumière (66) est rattaché de manière fixe à au moins l'un ou l'autre de l'extension (64) et de l'élément de guidage de lumière (66) ;
la source de lumière (67) pour l'élément de guidage de lumière (66) et le pilote (69) pour l'élément de guidage de lumière (66) sont disposés sur une plaque de base commune (72) et la plaque de base (72) est supportée fixe sur au moins l'un ou l'autre de l'extension (64) et de l'élément de guidage de lumière (66) ;
**caractérisé en ce que** le système d'éclairage :
comprend en outre un fil conducteur (75, 76) qui est acheminé dans le boîtier (36) depuis une paroi arrière (36a) du boîtier (36) de façon à fournir de l'énergie électrique au pilote (69) pour l'élément de guidage de lumière (66), dans lequel le fil conducteur (75, 76) est formé avec une partie incurvée (75a, 76a) qui se renfle vers l'avant devant la paroi arrière (36a) et est connectée à la plaque de base (72), et une section de plaque de régulation (64a) qui est disposée à l'extrémité latérale externe de l'extension (64) de manière à réguler latéralement le déplacement intérieur de la partie incurvée (75a, 76a) dans le boîtier (36) ; et
comprend en outre une section de support d'ajustement (52) qui permet de supporter le réflecteur (41, 47) dans le boîtier (36) de manière à lui permettre d'ajuster l'axe optique de la lumière principale (34, 35), dans lequel la partie incurvée (75a, 76a) et la section de support d'ajustement (52) sont aménagées latéralement côte à côte et à proximité étroite l'une de l'autre et la section de plaque de régulation (64a) est située latéralement entre la partie incurvée (75a, 76a) et la section de support d'ajustement (52).

2. Système d'éclairage pour un véhicule selon la revendication 1, dans lequel le pilote (69) pour l'élément de guidage de lumière (66) est supporté fixe sur au moins l'un ou l'autre de l'extension (64) et de l'élément de guidage de lumière (66) dans une position telle qu'il soit recouvert par l'extension (64) lorsqu'on l'observe de l'avant.

3. Système d'éclairage pour un véhicule selon la revendication 1, dans lequel la plaque de base (72) est verticalement allongée et est aménagée latéralement à l'extérieur de la lumière principale (34, 35) et la source de lumière (67) pour l'élément de guidage de lumière (66) et le pilote (69) pour l'élément de guidage (66) sont fixés à la plaque de base (72) de manière à être verticalement alignés l'un avec l'autre.

4. Système d'éclairage pour un véhicule selon la revendication 3, dans lequel l'élément de guidage de lumière (66) est configuré pour s'étendre verticalement de sorte que l'extrémité supérieure de l'élément de guidage de lumière (66) soit aménagé latéralement encore plus vers l'extérieur que son extrémité inférieure et la section incidente de lumière (68) est située à l'arrière de l'extrémité supérieure de l'élément de guidage de lumière (66) et le pilote (69) pour l'élément de guidage de lumière (66) est aménagé en dessous de la source de lumière (67) pour l'élément de guidage de lumière (66).
